**Europäisches Patentamt**

**European Patent Office**

**Office européen des brevets**

(19)

(11) Numéro de publication: **0 248 751**
**B1**

(12)

# FASCICULE DE BREVET EUROPEEN

(45) Date de publication du fascicule du brevet:
27.12.90

(51) Int. Cl.⁵: **B26D 7/01**, B23Q 3/18

(21) Numéro de dépôt: 87440033.6

(22) Date de dépôt: 05.06.87

(54) Ensemble de centrage automatique d'un produit sous une tête de découpe.

(30) Priorité: 06.06.86 FR 8608326

(43) Date de publication de la demande:
09.12.87 Bulletin 87/50

(45) Mention de la délivrance du brevet:
27.12.90 Bulletin 90/52

(84) Etats contractants désignés:
AT BE CH DE LI LU NL SE

(56) Documents cités:
DE-A- 2 626 206
DE-C- 484 595
FR-A- 2 228 583
US-A- 1 800 706
US-A- 2 901 085

VOEDING EN TECHNIEK,
vol. 1, no. 27, 1 novembre 1967, pages 687-688, Zeist,
NL; "Kaasdeelmachine, een interessante Nederlandse
ontwikkeling"
PATENT ABSTRACTS OF JAPAN,
vol. 9, no. 155 (M-392)[1878], 29 juin 1985; &
JP-A-60 30 539 (AMADA K.K.) 16-02-1985

(73) Titulaire: Etablissements Guy RIONDE, La Samaritaine,
F-88800 Vittel(FR)

(72) Inventeur: Rionde, Guy, 3, rue des Aubépines,
F-88800 Vittel(FR)

(74) Mandataire: Metz, Paul, Cabinet METZ PATNI 95, rue de
la Ganzau, F-67100 Strasbourg(FR)

## Description

La présente invention se rapporte à un ensemble de centrage automatique d'un produit, par exemple alimentaire, sous une tête de découpe en vue de son fractionnement en parts selon le préambule de la revendication 1.

On connaît la découpe automatique des produits alimentaires fabriqués en volume important tels que meules de fromage, de pain...

L'effet recherché est la découpe parfaitement symétrique à partir du centre, de manière à constituer des parts égales. Dès lors, il convient de présenter le produit parfaitement centré sous l'organe de coupe à l'aide d'un mécanisme de centrage automatique.

Parmi les divers mécanismes employés actuellement, il existe ceux comportant des rampes obliques escamotables venant se placer sur le trajet du produit pour le faire glisser en position centrale pendant le déplacement du produit, réalisant ainsi un véritable effet de convergence en position centrale.

Il existe aussi des mécanismes à table de coupe mobile selon des mouvements latéraux et longitudinaux permettant de réaliser le centrage parfait du produit. Ces mécanismes antérieurs ne donnent pas entièrement satisfaction.

Pour les premiers, la commande des mouvements d'effacement des plaques par pivotement ou basculement s'avère complexe et donc peu fiable et limitée en vitesse.

Pour les seconds, la commande de table nécessite un système de détection et de servomécanisme accroissant notablement le prix de revient de l'ensemble.

L'invention a pour but de remédier à ces inconvénients en proposant un ensemble de centrage automatique d'un produit sous une tête de découpe en vue de son fractionnement en parts, caractérisé en ce qu'il comprend au-dessus d'une table de découpe, quatre bras de centrage montés pivotants en deux groupes par des axes verticaux portés par deux blocs-supports de bordure et d'autre part, en dessous de la table de découpe, un mécanisme d'actionnement comportant un plateau rotatif commandé tangentiellement par un vérin à double effet, plateau comprenant des lumières curvilignes le long de chacune desquelles se déplace un élément directeur assujetti en mouvements de translation par un dispositif de translation, ledit élément directeur étant relié cinématiquement par un ensemble biellette-manivelle aux axes verticaux commandant les bras.

La structure de l'invention comprenant l'association des moyens ci-dessus présente de nombreux avantages dont on citera de façon non exhaustive les principaux ci-dessus :
- centrage parfait du produit
- structure simple
- mécanisme fiable
- vitesse de fonctionnement satisfaisante
- sécurité
- contact progressif des bras avec le produit

On connaît des dispositif de centrage comme ceux décrits dans les brevets américain n° 2 901 805 au nom de Thomas A. Mc COY qui décrit l'état de la technique le plus proche ou allemand n° P 2 626 206 au nom de la société KRUPP.

Selon la première invention, des pattes sont montées basculantes par paires, de part et d'autre d'une plateforme de centrage et d'élévation, mobile verticalement et traversée par un convoyeur à chaîne, en vue d'amener des corps cylindriques sur cette plateforme, puis de les centrer avant leur élévation jusqu'à un niveau supérieur.

Chacune des pattes et montée basculante par l'intermédiaire d'un axe horizontal monté lui-même sur le bâti de façon équidistante d'un plan vertical transversal médian, de manière à permettre le centrage du corps cylindrique sur la plateforme.

Les pattes sont rappelées chacune en position inclinée par un ressort de rappel. Un doigt vertical actionné par la montée de la plateforme permet de forcer la patte en position droite escamotée et de libérer ainsi le corps cylindrique qui est élevé à la verticale.

Ces pattes ne peuvent exécuter aucun mouvement de pivotement autour d'un axe perpendiculaire à la chaîne de convoyeur amenant le corps cylindrique sur la plateforme.

Si ces pattes sont disposées de façon équidistantes, elles ne peuvent à elles seules effectuer le centrage, en raison de leur unique degré de liberté et de l'absence d'une force motrice suffisante. L'aide au centrage est apportée par le mouvement de translation du convoyeur.

Ainsi, elles ne peuvent convenir pour le centrage d'objets plats qu'elles pourraient, de plus, détériorer par leur surface de contact trop petit et saillante.

Par ailleurs, l'adaptation à différents formats s'avère notablement faible.

Selon la deuxième invention on monte, face à face, deux dispositifs de préhension du type pince, comportant chacun deux mâchoires jumelées.

Cette association de moyens permet de saisir symétriquement et de bloquer un objet quelconque, mais de préférence de section circulaire.

Le principal inconvénient de ce type de dispositif concerne la limitation en taille des objets, en raison de l'angle d'ouverture maximale des mâchoires.

Par ailleurs, pour que la prise soit correcte, il faut que l'objet soit préalablement à peu près centré.

Ainsi, la fonction de maintien est prépondérante et le centrage ne constitue qu'un simple ajustement automatique lors de la prise.

On comprendra aisément que ce type de moyens ne peut convenir pour le centrage avant découpe, par exemple d'une meule de gruyère ou analogue, comme le permet la présente invention.

Les caractéristiques techniques et d'autres avantages sont consignés dans la description qui suit effectuée à titre d'exemple non limitatif sur un mode d'exécution en référence aux dessins accompagnants dans lesquels :

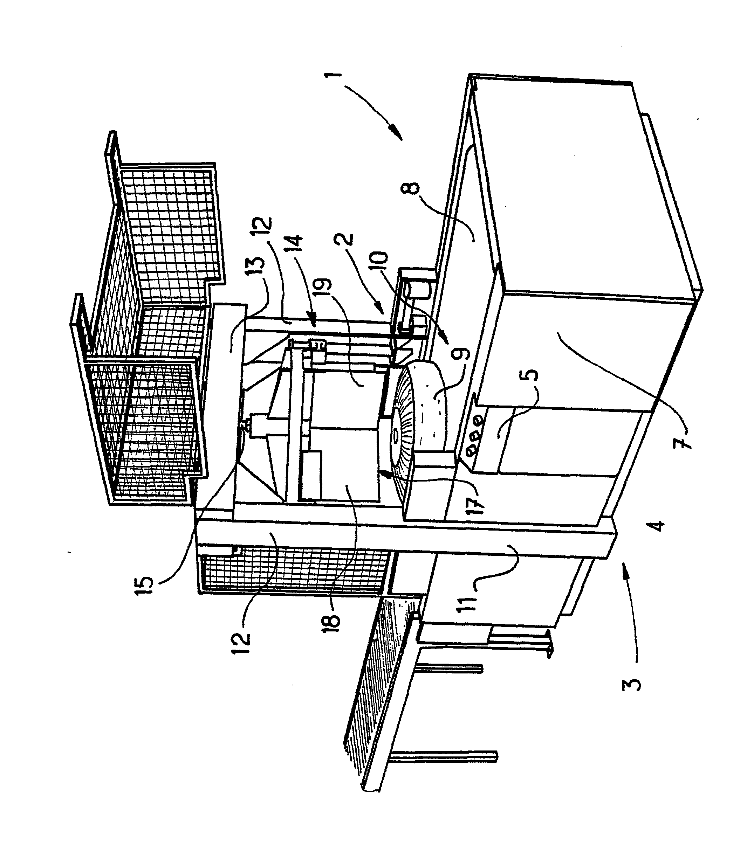

- la figure 1 est une vue générale en perspective d'ensemble de la machine à découper comportant le dispositif de centrage selon l'invention ;

- la figure 2 est une vue agrandie en perspective montrant plus particulièrement le portique et l'ensemble de centrage selon l'invention ;

- les figures 3a, 3b et 3c sont les schémas illustratifs d'une séquence de coupe d'un produit rond par exemple une meule de gruyère ;

- la figure 4 est une vue coupe verticale du mécanisme de commande des bras de centrage ;

- la figure 5 est une vue en plan du mécanisme de commande des bras de centrage ;

- la figure 6 est une vue générale en coupe verticale de la machine automatique de découpe comprenant le mécanisme de centrage selon l'invention ;

- la figure 7 est une vue en perspective d'une tête de contact et de poussée équipant l'extrémité de chaque bras de centrage.

La présente invention se rapporte à un ensemble de centrage automatique de produits à découper, notamment de produits alimentaires à monter dans une machine automatique sous la tête de découpe.

On prendra comme exemple la découpe automatique de meules de gruyère tout en précisant que cette application ne doit nullement être considérée comme limitative et que divers produits de forme et de nature analogues peuvent tout aussi bien être appliqués à l'invention.

On peut citer ainsi les divers fromages, les pièces de pâtisserie, les miches de pain, tous les produits alimentaires de forme polygonale ou ronde, présentés en grande quantité et débités lors de l'achat.

L'idée générale inventive consiste à employer un mécanisme commun actionnant simultanément quatre bras de centrage pourvus chacun, en extrémité, d'un détecteur de contact et de poussée, destinés à ramener vers le centre, par un mouvement d'ensemble, sous la tête de coupe un produit chargé automatiquement sur le tapis d'amenée de la bande transporteuse d'une machine de découpe.

La machine automatique de découpe 1 sur laquelle est monté l'ensemble de centrage 2 selon l'invention se compose d'un soubassement 3 renfermant les différents organes de commande et de fonctionnement automatique tels qu'une armoire de commande 4 à partir d'un tableau 5 par exemple par automate programmable.

Le soubassement 3 renferme en outre le mécanisme d'actionnement 6 de l'ensemble de centrage 2 puis un bloc d'entraînement 7 d'un tapis roulant 8 permettant l'amenée du produit à découper par exemple une meule de gruyère 9 sur une table de découpe 10 puis son évacuation.

Le soubassement 3 se prolonge vers le haut en partie centrale au-dessus de la table de découpe 10 par un bâti 11 en forme de portique 12 portant montée coulissante verticalement sur sa traverse supérieure 13 une tête de découpe 14 constituée d'une tige centrale coulissante 15 supportant un bloc porte-lames 16 équipé d'un couteau 17 à plusieurs lames en disposition, nombre et forme adaptés à la découpe à réaliser, par exemple deux lames croisées 18 et 19.

L'ensemble de centrage 2 se compose de quatre bras de centrage 20, 21, 22 et 23 disposés par paire en regard de part et d'autre de la table de découpe 10. Ces bras sont entièrement décalés et montés pivotants deux à deux sur des axes verticaux de liaison 24, 25, 26 et 27 sur des supports de bordure 28 et 29 fixés aux profilés de bordure du tapis roulant 8 au niveau de la table de coupe 10.

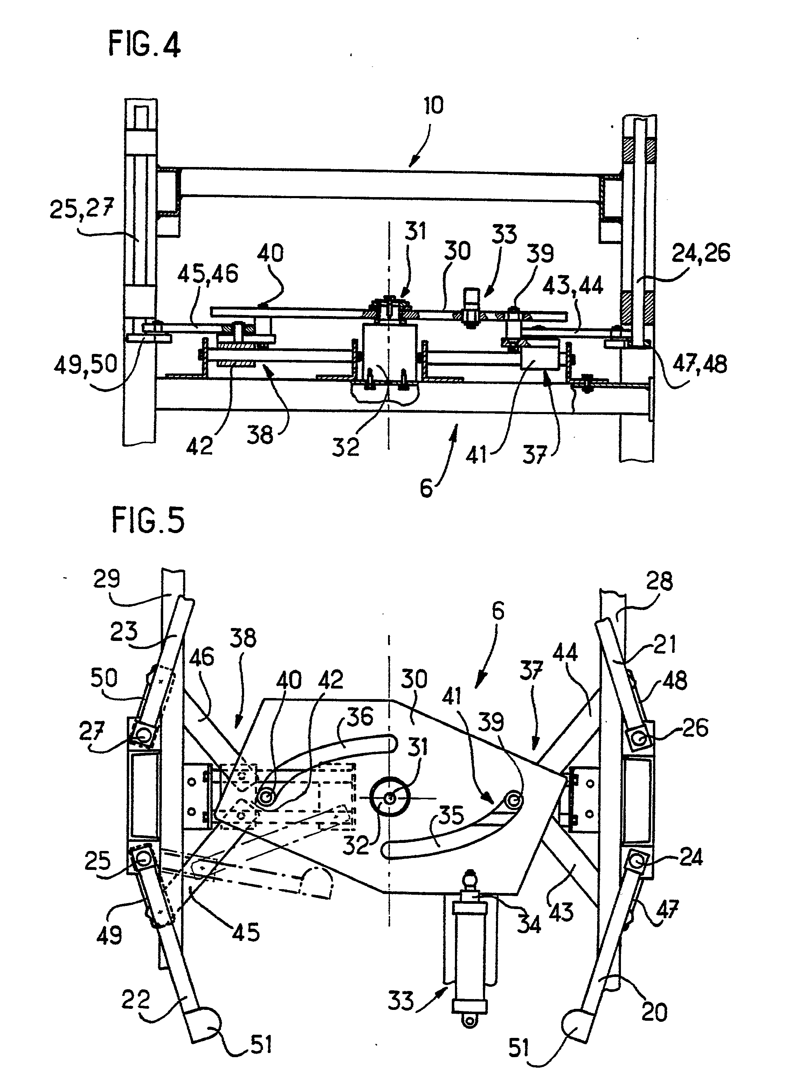

Plus précisément, l'ensemble de centrage 2 et son mécanisme d'acheminement 6 selon l'invention se composent des organes et éléments suivants apparaissant en détail sur les figures 4 et 5.

Un plateau rotatif central 30 disposé sous la table de découpe (figure 4) est monté pivotant autour d'un axe central 31 porté par un moyeu 32. Ce plateau est actionné en rotation par un vérin adjacent 33 à double effet dont la tige 34 est articulée en extrémité latérale du plateau rotatif 30 pour réaliser une poussée tangentielle.

Ledit plateau affecte une forme générale rectangulaire. Il présente de part et d'autre de son centre deux lumières curvilignes symétriques 35 et 36 par exemple paraboliques délimitant des ouvertures guides le long de chacune desquelles circule l'élément directeur d'un dispositif de translation 37 ou 38 actionnant le pivotement des bras.

L'élément directeur sera par exemple un galet 39 ou 40 se déplaçant le long des lumières 35 ou 36 dont les chants servent de chemins de roulement. Le tracé curviligne de ces chants permet d'entraîner en translation avant ou arrière l'équipage mobile ou coulisseaux 41 et 42 des dispositifs de translation et ainsi d'actionner les bras en mouvements pivotants de rapprochement ou d'éloignement.

Plus précisément, les dispositifs de translation 37 ou 38 se composent pour chaque groupe de bras de deux biellettes de commande respectivement 43, 44 et 45, 46 disposées en V à pointe dirigée vers le plateau.

Les biellettes de chaque groupe sont articulées de façon commune à leur extrémité côté plateau à l'axe portant les galets 39 ou 40 et sont reliées de façon pivotante aux axes verticaux de liaison 24 à 27 commandant les bras de centrage de chaque groupe par l'intermédiaire de leviers articulés 47, 48 et 49, 50. Ces biellettes transmettent un mouvement de convergence d'ensemble vers le centre par une commande unique pour les bras de centrage qui sont assujettis à un même plateau d'actionnement assurant la coordination et la simultanéité des mouvements.

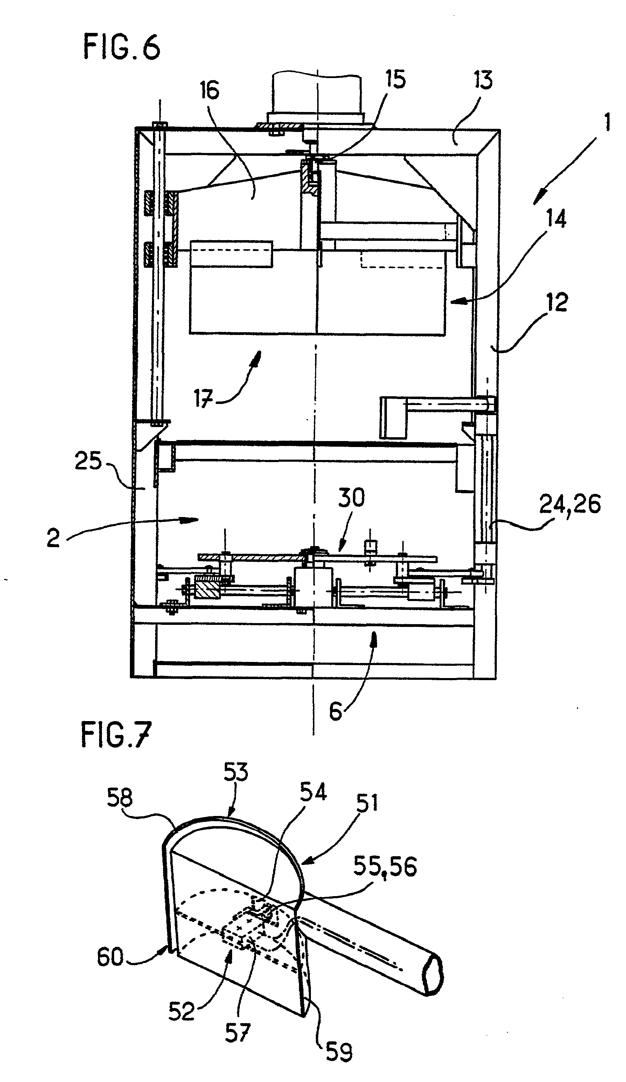

Les bras de centrage sont conformés en extrémité selon une tête bombée telle que 51 et pourvus de capteurs de détecteur de contact et poussée, identiques tels que 52, représenté isolément sur la figure 6.

Ces détecteurs sont logés dans la tête d'extrémité 51 comportant une face bombée 53 pourvue d'une ouverture 54 au travers de laquelle passe un élément mobile 55 sensible à la pression, par exemple à galet 56, provenant d'un interrupteur à contact ou contacteur 57, logé dans la tête d'extrémité 51. Cet interrupteur est relié au circuit de commande de la machine.

La tête de détection comporte sur la face avant bombée 53 un écran flexible 58 également bombé, fixé à une seule de ses extrémités transversales 59 susceptible de flexion autour de ladite extrémité 59 par rapport à son autre extrémité laissée libre 60.

Cet écran constitue d'une part une protection pour l'organe sensible du détecteur qui est l'interrupteur 57 et d'autre part un amortisseur de chocs et de contact. Son débattement en flexion constitue le débattement nécessaire du contacteur 57 entre un état ouvert et un état fermé correspondant à une position sortie ou de retrait de son élément palpeur.

Le contact avec le corps de la meule s'effectue par l'intermédiaire de l'écran qui transmet le mouvement au palpeur.

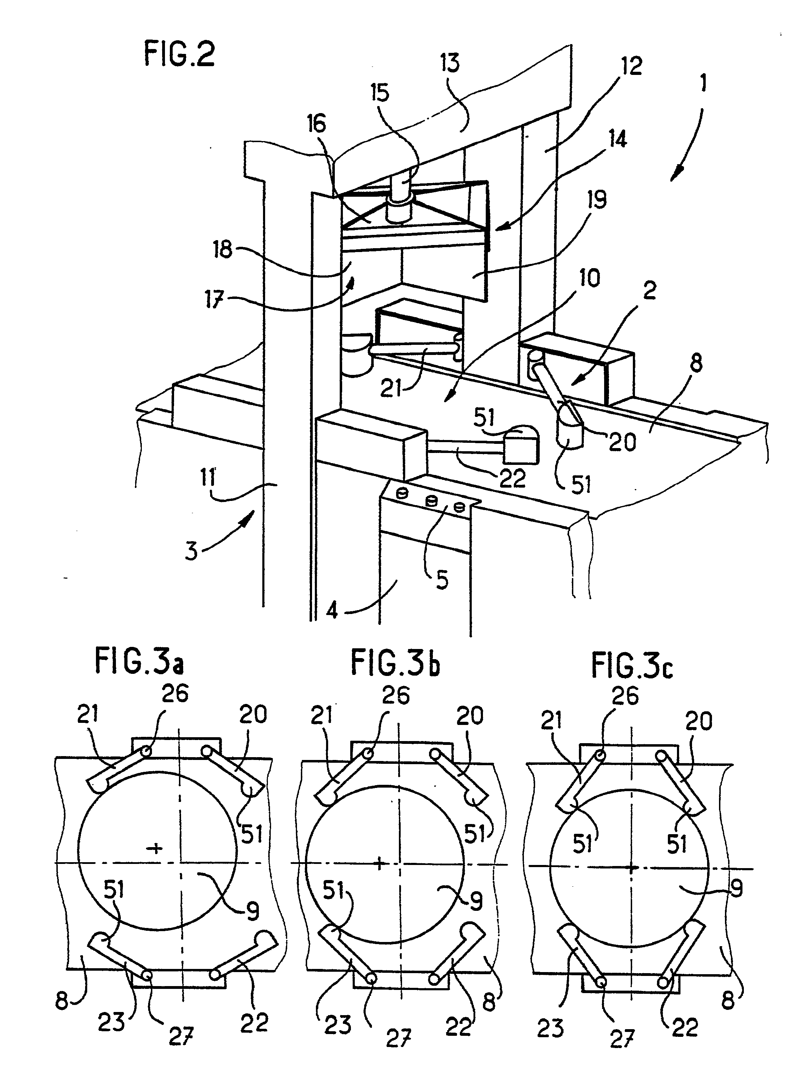

On expliquera maintenant les différentes phases de fonctionnement de l'ensemble de centrage selon l'invention en se référant aux différentes figures et plus particulièrement à la figure 3 explicative d'un mouvement de centrage.

La meule de gruyère est amenée à l'entrée du tapis approximativement centrée, c'est-à-dire déchargée à égale distance des bords. Elle est amenée par le tapis transporteur jusqu'à la table de coupe 10 dans la zone balayée par les bras de centrage qui sont alors ouverts.

Le tapis s'arrête et les bras sous l'action du vérin à travers le plateau rotatif et le mécanisme de centrage se referment simultanément. Le premier bras en contact avec le corps de la meule la fait glisser latéralement jusqu'à contact avec un des autres bras qui, par réaction, la pousse vers le centre. Le périmètre d'action des bras se resserrant, la meule fait l'objet de poussées centripètes simultanées qui la forcent dans une position parfaitement centrale.

Les capteurs de force transmettent l'effort de poussée et quand celui-ci dépasse une valeur prédéterminée l'armoire de commande annule la pression sur le vérin. La meule reste prise dans l'étau des bras de centrage et est libérée par le retrait des bras consécutif à la rotation inverse des bras sous l'effet de la pression contraire appliquée sur le vérin.

La découpe peut avoir lieu. La descente du porte-lames est commandée et les couteaux tranchent la meule selon le tracé de coupe souhaité.

Les couteaux s'arrêteront à une faible distance de la table de coupe pour que les portions ou parts formées ne se détachent pas immédiatement car maintenus par la croûte de la surface inférieure. La meule est alors évacuée sans dislocation jusqu'en extrémité du transporteur.

Les morceaux découpés tombent mais ne s'individualisent pas. La meule est alors évacuée par le tapis transporteur jusqu'en extrémité d'où elle est reprise manuellement ou par un autre transporteur ou convoyeur vers un poste d'emballage.

Diverses modifications et substitutions par des moyens et matériaux équivalents ainsi que des variantes directes, adjonctions d'éléments et autres modifications sans apport inventif peuvent être apportées sans pour autant sortir du cadre et de l'esprit de la présente invention.

## Revendications

1. Ensemble de centrage automatique d'un produit amené sous une tête de découpe par un tapis roulant, en vue de son fractionnement en parts, qui comprend au-dessus de la table de travail quatre éléments de centrage montés pivotants, caractérisé en ce que les quatre éléments de centrage sont des bras de centrage (20, 21) et (22, 23) montés pivotants et assujettis par paires en déplacements de pivotement et de centrage autour de deux paires d'axes verticaux de liaison (24, 26 et 25, 27), portés par des supports de bordure (28 et 29) et en ce que l'ensemble de centrage comprend en outre, en-dessous de la table de découpe (10), un mécanisme d'actionnement possédant un plateau rotatif (30) commandé tangentiellement par un vérin à double effet (33), plateau présentant des lumières curvilignes (35) et (36) le long de chacune desquelles se déplace un élément directeur assujetti en mouvements de translation par un dispositif de translation (37) ou (38), ledit élément directeur étant relié cinématiquement par un ensemble du type biellette-manivelle aux axes verticaux de liaison (24, 25, 26 et 27) commandant les bras de centrage.

2. Ensemble selon la revendication 1 caractérisé en ce que les éléments directeurs sont des galets (39) ou (40) en liaison mécanique de commande avec les coulisseaux (41 et 42) des dispositifs de translation (37 ou 38) et des biellettes (43, 44) et (45, 46) disposées en V à pointe dirigée vers le plateau de liaison par un levier intermediaire (47 à 50) avec les axes verticaux de liaison (24 à 27) autour desquels sont articulés les bras de centrage.

3. Ensemble selon les revendications 1 et 2, caractérisé en ce que les bras de centrage sont conformés en extrémité en tête bombée (51) à face bombée (53) pourvue d'une ouverture (54) au travers de laquelle passe un élément mobile (55) sensible à la pression d'un détecteur de contact (52), par exemple le galet (56) d'un interrupteur à contact (57), la tête de contact comprenant en outre sur sa face avant bombée (53) un écran flexible (58) également bombé, monté flexible autour d'une de ses extrémités transversales (59).

4. Ensemble selon la revendication 1, caractérisé en ce que les lumières curvilignes (35 et 36) affectent un tracé parabolique.

5. Ensemble selon la revendication 1, caractérisé en ce que le plateau rotatif (30) est actionné en rotation par un vérin adjacent (33) de poussée tangentielle à double effet.

## Patentansprüche

1. Vorrichtung für das automatische Zentrieren eines Produktes, das von einem Förderband für eine Aufteilung in Portionen unter einem Schneidkopf gebracht wird, wobei die Vorrichtung oberhalb des Arbeitstisches vier Zentrierelemente enthält, die schwenkbar eingebaut sind, dadurch gekennzeichnet, daß die vier Zentrierelemente Hebel für die Zentrierung (29, 21) und (22, 23) sind, die schwenkbar und paarweise für Schwenk- und Zentrierbewegungen um zwei Paare von senkrechten Verbindungsspindeln (24, 26 und 25, 27) eingebaut sind, die von Randsupporten (28 und 29) getragen werden, und daß die Vorrichtung für das Zentrieren außerdem unterhalb des Tisches für die Aufteilung (10) eine Einrichtung für die Betätigung enthält, die aus einer drehenden Scheibe (30) besteht, die von einem doppelt wirkenden Zylinder (33) tangential gesteuert wird, wobei die Scheibe (30) bogenförmige Schlitze (35 und 36) aufweist und sich entlang jeder dieser Schlitze ein Führungsorgan bewegt, das von einer Einrichtung für die Übertragung (37 oder 38) gesteuert wird, wobei das besagte Führungsorgan über ein Gestänge mit Lenker und Kurbel mit den senkrechten Verbindungsspindeln (24, 25, 26 und 27), die die Zentrierhebel betätigen, kinematisch verbunden sind.

2. Vorrichtung gemäß Anspruch 1, dadurch gekennzeichnet, daß die Führungsorgane Laufrollen (39 oder 40) sind, die mit den Gleitstücken (41 und 42) der Einrichtungen für die Übertragung (37 oder 38) und Lenkern (43, 44) und (45, 46), die gemäß einem Winkel mit der Spitze zu der Scheibe hin angeordnet sind, über einen Zwischenhebel (47 bis 50) mit den senkrechten Verbindungsspindeln (24 bis 27) mechanisch verbunden sind, um die die Zentrierhebel angelenkt sind.

3. Vorrichtung gemäß den Ansprüchen 1 und 2, dadurch gekennzeichnet, daß das Ende der Zentrierhebel einen gewölbten Kopf (51) mit einer gewölbten Fläche (53) aufweist, die mit einer Öffnung (54) versehen ist, durch die ein bewegliches Element (55) eines Abtastgebers (52), der auf Druck empfindlich ist, beispielsweise die Rolle (56) eines Kontaktschalters (57) herausragt, wobei der Abtastkopf außerdem eine biegsame Blende enthält, die ebenfalls gewölbt ist, die sich an einem ihrer Enden in Querrichtung (59) biegen kann.

4. Vorrichtung gemäß Anspruch 1, dadurch gekennzeichnet, daß die bogenförmigen Schlitze (35 und 36) einen parabolischen Verlauf aufweisen.

5. Vorrichtung gemäß Anspruch 1, dadurch gekennzeichnet, daß die drehende Scheibe (39) mit Hilfe eines anliegenden, doppelt wirkenden Zylinders (33), der einen tangentialen Schub erzeugt, in Drehung versetzt wird.

**Claims**

1. Self-centering unit for a product brought beneath a cutting-up head by a conveying belt with a view to this product being divided up into parts, which self-centering unit comprises four pivotably mounted centering elements above the work table, characterised in that the four centering elements are centering arms (20, 21) and (22, 23) which are pivotably mounted and are subjected in pairs to pivoting and centering displacements around two pairs of vertical connection shafts (24, 26 and 25, 27) carried by edge supports (28 and 29), and in that the centering unit further comprises, beneath the cutting-up table (10), an actuating mechanism having a rotating plate (30) tangentially controlled by a double-action screw jack (33), the said plate having curved elongated holes (35) and (36), along each of which there moves a guiding element subjected to displacement movements by a displacement device (37) or (38), the said guiding element being kinematically connected by an assembly of the connecting rod-and-crank type to the vertical connection shafts (24, 25, 26 and 27) controlling the centering arms.

2. Unit according to claim 1, characterised in that the guiding elements are rollers (39) or (40) mechanically connected for control to the slides (41 and 42) of the displacement devices (37 or 38), and connecting rods (43, 44) and (45, 46) which are arranged in a V with the point directed towards the plate for connection by an intermediate lever (47 to 50) to the vertical connection shafts (24 to 27) around which the centering arms are articulated.

3. Unit according to claims 1 and 2, characterised in that the centering arms are formed at the end in a convex head (51) with a convex face (53) provided with an opening (54) through which a movable element (55) passes, which movable element is sensitive to the pressure of a contact detector (52), for example the roller (56) of an interrupter (57) acting on contact, the contact head further comprising on its convex front face (53) a flexible screen (58) which is also convex and is flexibly mounted around one of the transverse ends (59) of the said contact head.

4. Unit according to claim 1, characterised in that the curved elongated holes (35 and 36) assume a parabolic course.

5. Unit according to claim 1, characterised in that the rotating plate (30) is brought into rotation by an adjacent tangential-thrust double-action screw jack (33).

**FIG.2**

**FIG.3a**  **FIG.3b**  **FIG.3c**

**FIG.4**

**FIG.5**

FIG.6

FIG.7